# EUROPEAN PATENT APPLICATION

(11) **EP 4 811 710 A2**
(43) Date of publication of application: **23.09.2026**
(21) Application number: 26181886.8
(22) Date of filing: 30.06.2022
(51) Int. Cl.: H04L 5/00

(54) **APPARATUS, SYSTEM, AND METHOD OF COMMUNICATING A PACKET WITH A TRAINING (TRN) FIELD**

(62) Document number(s) of the earlier application(s) in accordance with Art. 76 EPC: 22949634.4 / 4 548 485
(71) Applicant: Intel Corporation, Santa Clara, CA 95054 (US)
(72) Inventor: CARIOU, Laurent, 29290 Milizac (FR); KENNEY, Thomas, J., Portland, 97229 (US)
(74) Representative: Viering, Jentschura & Partner mbB Patent- und Rechtsanwälte

(57) **Abstract**

For example, a millimeterWave (mmWave) wireless communication station (STA) may be configured to transmit a preamble of a packet over a mmWave wireless communication channel, the preamble including a Short Training Field (STF), a Long Training Field (LTF) after the STF, and a Signal (SIG) field after the LTF, wherein the SIG field includes a presence indicator configured to indicate that the packet includes a Training (TRN) field configured for Beamforming (BF) training; and to transmit the TRN field of the packet over the mmWave wireless communication channel, the TRN field is after the SIG field, the TRN field including a plurality of TRN subfields, wherein a TRN subfield includes at least one of the STF or the LTF.

## Description

### TECHNICAL FIELD

Aspects described herein generally relate to communicating a packet with a Training (TRN) field.

### BACKGROUND

Devices in a wireless communication system may be configured to communicate over a millimeterWave (mmWave) wireless communication channel. There is a need to provide a technical solution to support beamforming communications over the mmWave wireless communication channel.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a multi-link communication scheme, which may be implemented in accordance with some demonstrative aspects.
Fig. 3 is a schematic illustration of a multi-link communication scheme, which may be implemented in accordance with some demonstrative aspects.
Fig. 4 is a schematic illustration of a Null Data Packet (NDP), in accordance with some demonstrative aspects.
Fig. 5 is a schematic illustration of an NDP, in accordance with some demonstrative aspects.
Fig. 6 is a schematic illustration of a Physical layer (PHY) Protocol Data Unit (PPDU), in accordance with some demonstrative aspects.
Fig. 7 is a schematic illustration of a packet exchange, in accordance with some demonstrative aspects.
Fig. 8 is a schematic illustration of a packet exchange, in accordance with some demonstrative aspects.
Fig. 9 is a schematic illustration of an NDP, in accordance with some demonstrative aspects.
Fig. 10 is a schematic flow-chart illustration of a method of communicating a packet including a Training (TRN) field, in accordance with some demonstrative aspects.
Fig. 11 is a schematic flow-chart illustration of a method of communicating a packet including a TRN field, in accordance with some demonstrative aspects.
Fig. 12 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020*)*;* and/or IEEE 802.11be (IEEE *P802.11be*/*D1.5 Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), March 2022*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared. Dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band.

Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by a mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

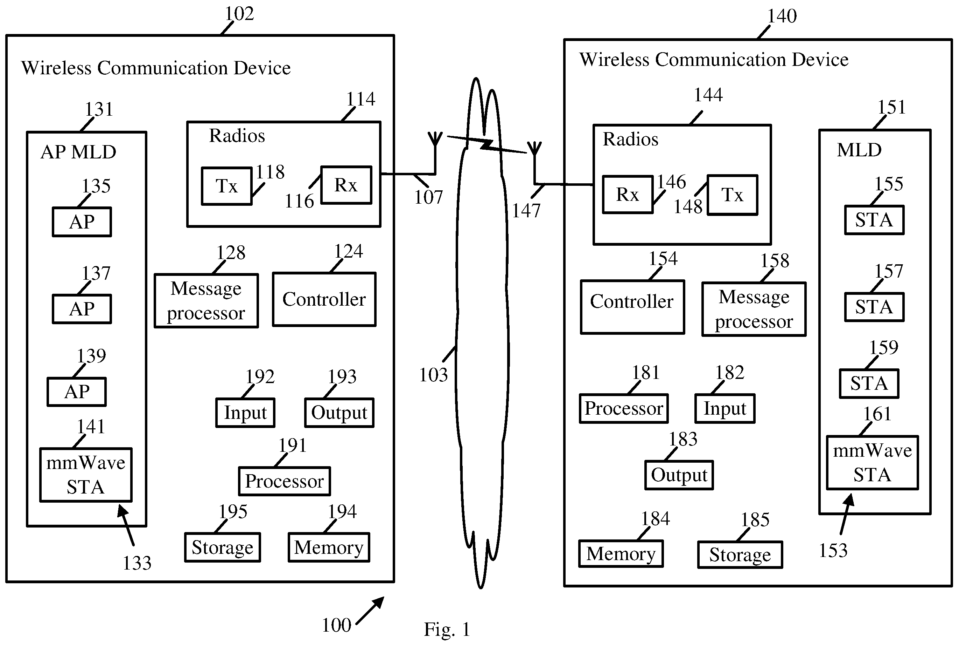

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, and/or one or more other devices.

In some demonstrative aspects, devices 102 and/or 140 may include a mobile device or a non-mobile, e.g., a static, device.

For example, devices 102, and/or 140 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a floppy disk drive, a Compact Disk (CD) drive, a CD-ROM drive, a DVD drive, or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102 and/or 140 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, one or more channels in a 2.4GHz wireless communication frequency band, one or more channels in a 5GHz wireless communication frequency band, and/or one or more channels in a 6GHz wireless communication frequency band. For example, WM 103 may additionally or alternatively include one or more channels in a mmWave wireless communication frequency band.

In other aspects, WM 103 may include any other type of channel over any other frequency band.

In some demonstrative aspects, device 102 and/or device 140 may include one or more radios including circuitry and/or logic to perform wireless communication between devices 102, 140, and/or one or more other wireless communication devices. For example, device 102 may include one or more radios 114, and/or device 140 may include one or more radios 144.

In some demonstrative aspects, radios 114 and/or 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a sub-10Ghz band, for example, 2.4GHz band, a 5GHz band, a 6GHz band, and/or any other sub-10GHz band; and/or an mmWave band, e.g., a 45Ghz band, a 60Ghz band, and/or any other mmWave band; and/or any other band, e.g., a 5G band, an S1G band, and/or any other band.

In some demonstrative aspects, radios 114 and/or 144 may include, or may be associated with one or more, e.g., a plurality of, antennas.

In some demonstrative aspects, device 102 may include one or more, e.g., a plurality of, antennas 107, and/or device 140 may include one or more, e.g., a plurality of, antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or the one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102 and/or device 140 may include, operate as, perform the role of, and/or perform one or more functionalities of, one or more STAs. For example, device 102 may include at least one STA, and/or device 140 may include at least one STA.

In some demonstrative aspects, device 102 and/or device 140 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, device 102 and/or device 140 may include, operate as, perform the role of, and/or perform one or more functionalities of, one or more mmWave STAs, e.g., DMG STAs, EDMG STAs, and/or any other mmWave STA. For example, device 102 may include, operate as, perform the role of, and/or perform one or more functionalities of, one or more mmWave STAs, and/or device 140 may include, operate as, perform the role of, and/or perform one or more functionalities of, one or more mmWave STAs.

In other aspects, devices 102, and/or 140 may include, operate as, perform the role of, and/or perform one or more functionalities of, any other wireless device and/or station, e.g., a WLAN STA, a WiFi STA, and the like.

In some demonstrative aspects, device 102 and/or device 140 may be configured to operate as, perform the role of, and/or perform one or more functionalities of, an access point (AP), e.g., an EHT AP STA.

In some demonstrative aspects, device 102 and/or device 140 may be configured to operate as, perform the role of, and/or perform one or more functionalities of, a non-AP STA, e.g., an EHT non-AP STA.

In other aspects, device 102 and/or device 140 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF).The AP may perform any other additional or alternative functionality.

In some demonstrative aspects devices 102 and/or 140 may be configured to communicate in an EHT network, and/or any other network.

In some demonstrative aspects, devices 102 and/or 140 may be configured to operate in accordance with one or more Specifications, for example, including one or more *IEEE 802.11 Specifications*, e.g., an *IEEE 802.11-2020 Specification*, an *IEEE 802.11be Specification*, an *IEEE 802.11ay Specification* and/or any other specification and/or protocol.

In some demonstrative aspects, device 102 and/or device 140 may include, operate as, perform a role of, and/or perform the functionality of, one or more multi-link logical entities, e.g., as described below.

In other aspect, device 102 and/or device 140 may include, operate as, perform a role of, and/or perform the functionality of, any other entities, e.g., which are not multi-link logical entities.

For example, a multi-link logical entity may include a logical entity that contains one or more STAs. The logical entity may have one MAC data service interface and primitives to the logical link control (LLC) and a single address associated with the interface, which can be used to communicate on a distribution system medium (DSM). For example, the DSM may include a medium or set of media used by a distribution system (DS) for communications between APs, mesh gates, and the portal of an extended service set (ESS). For example, the DS may include a system used to interconnect a set of basic service sets (BSSs) and integrated local area networks (LANs) to create an extended service set (ESS). In one example, a multi-link logical entity may allow STAs within the multi-link logical entity to have the same MAC address. The multi-link entity may perform any other additional or alternative functionality.

In some demonstrative aspects, device 102 and/or device 140 may include, operate as, perform a role of, and/or perform the functionality of, a Multi-Link Device (MLD). For example, device 102 may include, operate as, perform a role of, and/or perform the functionality of, at least one MLD, and/or device 140 may include, operate as, perform a role of, and/or perform the functionality of, at least one MLD, e.g., as described below.

For example, an MLD may include a device that is a logical entity and has more than one affiliated STA and has a single MAC service access point (SAP) to LLC, which includes one MAC data service. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102 and/or device 140 may be configured to operate as, perform the role of, and/or perform one or more functionalities of, an AP MLD.

In some demonstrative aspects, device 102 and/or device 140 may be configured to operate as, perform the role of, and/or perform one or more functionalities of, a non-AP MLD.

In other aspects, device 102 and/or device 140 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In one example, a multi-link infrastructure framework may be configured as an extension from a one link operation between two STAs, e.g., an AP and a non-AP STA.

In some demonstrative aspects, controller 124 may be configured to control, perform and/or to trigger, cause, instruct and/or control device 102 to operate as, perform a role of, and/or perform one or more operations and/or functionalities of, an AP MLD 131 including a plurality of STAs 133, e.g., including an AP STA 135, an AP STA 137, an AP STA 139, and/or an mmWave STA 141. In some aspects, as shown in Fig. 1, AP MLD 131 may include four STAs. In other aspects, AP MLD 131 may include any other number of STAs.

In one example, AP STA 135, AP STA 137, AP STA 139, and/or mmWave STA 141 may operate as, perform a role of, and/or perform one or more operations and/or functionalities of, an EHT AP STA. In other aspects, AP STA 135, AP STA 137, AP STA 139, and/or mmWave STA 141 may perform any other additional or alternative functionality.

In some demonstrative aspects, mmWave STA 141 may operate as, perform a role of, and/or perform one or more operations and/or functionalities of, a mmWave AP STA. In other aspects, mmWave STA 141 may operate as, perform a role of, and/or perform one or more operations and/or functionalities of an mmWave network controller to control communication over an mmWave wireless communication network.

In some demonstrative aspects, for example, the one or more radios 114 may include, for example, a radio for communication by AP STA 135 over a first wireless communication frequency channel and/or frequency band, e.g., a 2.4Ghz band, as described below.

In some demonstrative aspects, for example, the one or more radios 114 may include, for example, a radio for communication by AP STA 137 over a second wireless communication frequency channel and/or frequency band, e.g., a 5Ghz band, as described below.

In some demonstrative aspects, for example, the one or more radios 114 may include, for example, a radio for communication by AP STA 139 over a third wireless communication frequency channel and/or frequency band, e.g., a 6Ghz band, as described below.

In some demonstrative aspects, for example, the one or more radios 114 may include, for example, a radio for communication by mmWave STA 141 over a fourth wireless communication frequency channel and/or frequency band, e.g., an mmWave band, for example, a wireless communication band above 45Ghz, for example, a 60GHz band or any other mmWave band, e.g., as described below.

In some demonstrative aspects, the radios 114 utilized by STAs 133 may be implemented as separate radios. In other aspects, the radios 114 utilized by STAs 133 may be implemented by one or more shared and/or common radios and/or radio components.

In other aspects controller 124 may be configured to control, perform and/or to trigger, cause, instruct and/or control device 102 to operate as, perform a role of, and/or perform one or more operations and/or functionalities of, any other additional or alternative entity and/or STA, e.g., a single STA, multiple STAs, and/or a non-MLD entity.

In some demonstrative aspects, controller 154 may be configured to control, perform and/or to trigger, cause, instruct and/or control device 140 to operate as, perform a role of, and/or perform one or more operations and/or functionalities of, an MLD 151 including a plurality of STAs 153, e.g., including a STA 155, a STA 157, a STA 159, and/or a STA 161. In some aspects, as shown in Fig. 1, MLD 151 may include four STAs. In other aspects, MLD 151 may include any other number of STAs.

In one example, STA 155, STA 157, STA 159, and/or STA 161 may operate as, perform a role of, and/or perform one or more operations and/or functionalities of, an EHT STA. In other aspects, STA 155, STA 157, STA 159, and/or STA 161 may perform any other additional or alternative functionality.

In some demonstrative aspects, STA 161 may be configured to operate as, perform a role of, and/or perform one or more operations and/or functionalities of, an mmWave STA, e.g., as described below. For example, the mmWave STA 161 may be configured to operate as, perform a role of, and/or perform one or more operations and/or functionalities of, a non-AP mmWave STA, e.g., as described below.

In some demonstrative aspects, for example, the one or more radios 144 may include, for example, a radio for communication by STA 155 over a first wireless communication frequency channel and/or frequency band, e.g., a 2.4Ghz band, as described below.

In some demonstrative aspects, for example, the one or more radios 144 may include, for example, a radio for communication by STA 157 over a second wireless communication frequency channel and/or frequency band, e.g., a 5Ghz band, as described below.

In some demonstrative aspects, for example, the one or more radios 144 may include, for example, a radio for communication by STA 159 over a third wireless communication frequency channel and/or frequency band, e.g., a 6Ghz band, as described below.

In some demonstrative aspects, for example, the one or more radios 144 may include, for example, a radio for communication by mmWave STA 161 over a fourth wireless communication frequency channel and/or frequency band, e.g., a mmWave band, as described below.

In some demonstrative aspects, the radios 144 utilized by STAs 153 may be implemented as separate radios. In other aspects, the radios 144 utilized by STAs 153 may be implemented by one or more shared and/or common radios and/or radio components.

In some demonstrative aspects, controller 154 may be configured to control, perform and/or to trigger, cause, instruct and/or control MLD 151 to operate as, perform a role of, and/or perform one or more operations and/or functionalities of, a non-AP MLD. For example, STA 155, STA 157, STA 159, and/or mmWave STA 161 may operate as, perform a role of, and/or perform one or more operations and/or functionalities of, a non-AP STA, e.g., a non-AP EHT STA.

In some demonstrative aspects, controller 154 may be configured to control, perform and/or to trigger, cause, instruct and/or control MLD 151 to operate as, perform a role of, and/or perform one or more operations and/or functionalities of, an AP MLD. For example, STA 155, STA 157, STA 159, and/or mmWave STA 161 may operate as, perform a role of, and/or perform one or more operations and/or functionalities of, an AP EHT STA.

In other aspects controller 154 may be configured to control, perform and/or to trigger, cause, instruct and/or control device 140 to operate as, perform a role of, and/or perform one or more operations and/or functionalities of, any other additional or alternative entity and/or STA, e.g., a single STA, multiple STAs, and/or a non-MLD entity.

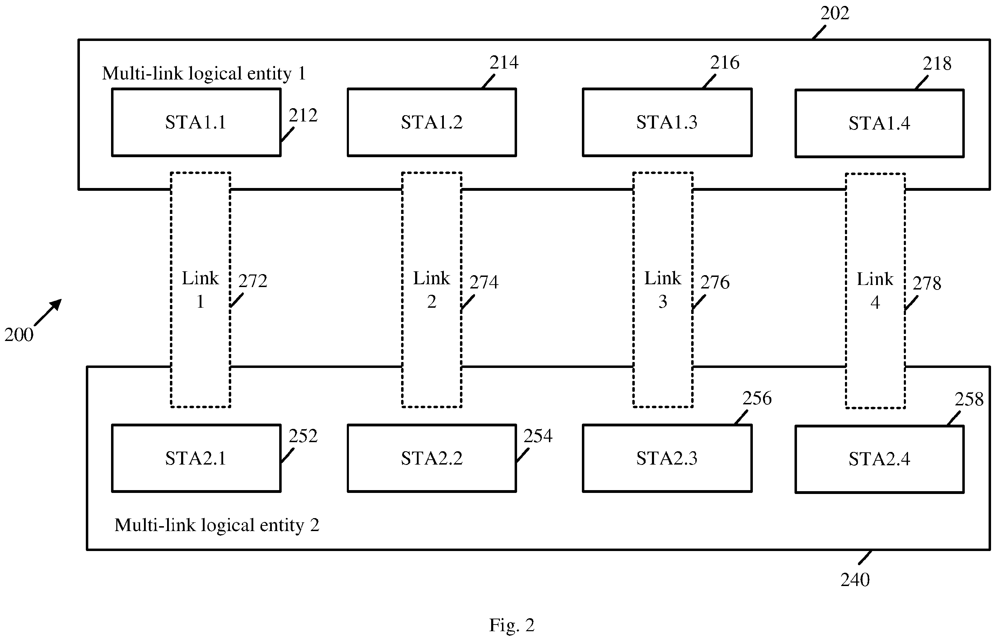

Reference is made to Fig. 2, which schematically illustrates a multi-link communication scheme 200, which may be implemented in accordance with some demonstrative aspects.

As shown in Fig. 2, a first multi-link logical entity 202 ("multi-link logical entity 1"), e.g., a first MLD, may include a plurality of STAs, e.g., including a STA 212, a STA 214, a STA 216, and a STA 218. In one example, AP MLD 131 (Fig. 1) may perform one or more operations of, one or more functionalities of, the role of, and/or the functionality of, multi-link logical entity 202.

As shown in Fig. 2, a second multi-link logical entity 240 ("multi-link logical entity 2"), e.g., a second MLD, may include a plurality of STAs, e.g., including a STA 252, a STA 254, a STA 256, and a STA 258. In one example, MLD 151 (Fig. 1) may perform one or more operations of, one or more functionalities of, the role of, and/or the functionality of, multi-link logical entity 240.

As shown in Fig. 2, multi-link logical entity 202 and multi-link logical entity 240 may be configured to form, setup and/or communicate over a plurality of links, for example, including a link 272 between STA 212 and STA 252, a link 274 between STA 214 and STA 254, a link 276 between STA 216 and STA 256, and/or a link 278 between STA 218 and STA 258.

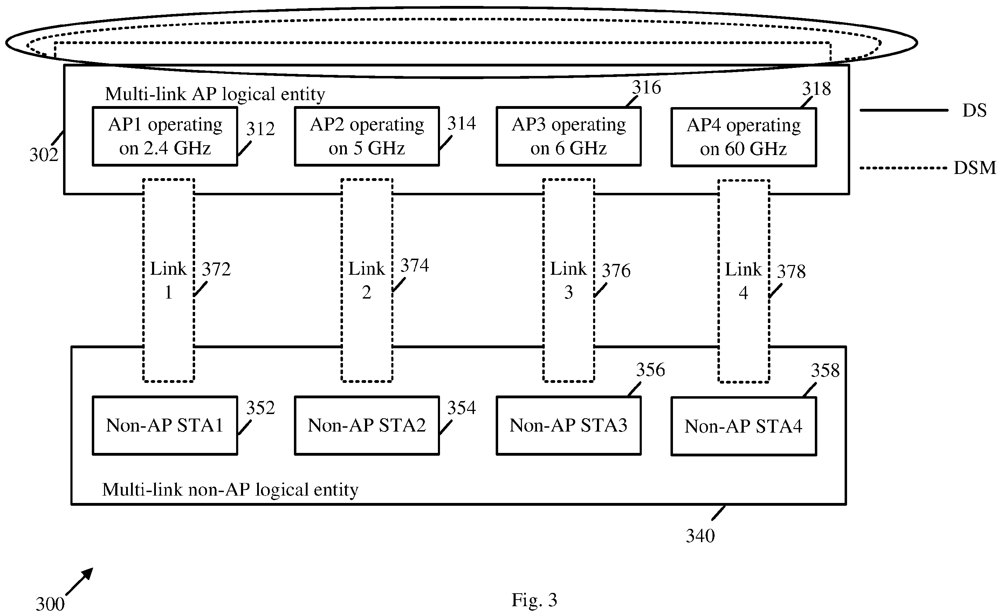

Reference is made to Fig. 3, which schematically illustrates a multi-link communication scheme 300, which may be implemented in accordance with some demonstrative aspects.

As shown in Fig. 3, a multi-link AP logical entity 302, e.g., an AP MLD, may include a plurality of AP STAs, e.g., including an AP STA 312, an AP STA 314, an AP STA 316, and an mmWave STA 318. In one example, AP MLD 131 (Fig. 1) may perform one or more operations of, one or more functionalities of, the role of, and/or the functionality of, multi-link AP logical entity 302.

As shown in Fig. 3, a multi-link non-AP logical entity 340, e.g., a non-AP MLD, may include a plurality of non-AP STAs, e.g., including a non-AP STA 352, a non-AP STA 354, a non-AP STA 356, and an mmWave STA 358. In one example, MLD 151 (Fig. 1) may perform one or more operations of, one or more functionalities of, the role of, and/or the functionality of, multi-link non-AP logical entity 340.

As shown in Fig. 3, multi-link AP logical entity 302 and multi-link non-AP logical entity 340 may be configured to form, setup and/or communicate over a plurality of links, for example, including a link 372 between AP STA 312 and non-AP STA 352, a link 374 between AP STA 314 and non-AP STA 354, a link 376 between AP STA 316 and non-AP STA 356, and/or a link 378 between mmWave STA 318 and mmWave STA 358.

For example, as shown in Fig. 3, multi-link AP logical entity 302 may include a multi-band AP MLD, which may be configured to communicate over a plurality of wireless communication frequency bands. For example, as shown in Fig. 3, AP STA 312 may be configured to communicate over a 2.4Ghz frequency band, AP STA 314 may be configured to communicate over a 5Ghz frequency band, AP STA 316 may be configured to communicate over a 6Ghz frequency band, and/or mmWave STA 318 may be configured to communicate over a mmWave frequency band. In other aspects, AP STA 312, AP STA 314, AP STA 316, and/or mmWave STA 318 may be configured to communicate over any other additional or alternative wireless communication frequency bands.

Referring back to Fig. 1, in some demonstrative aspects, device 102 and/or device 140 may be configured to support a technical solution for communication between mmWave STAs, e.g., mmWave STA 141 and mmWave STA 161, over the mmWave frequency band, e.g., as described below.

In some demonstrative aspects, device 102 and/or device 140 may be configured to support a technical solution to utilize communications over the sub-10GHz frequency band, for example, to assist one or more operations to be performed by the mmWave STAs, e.g., mmWave STA 141 and/or mmWave STA 161, over the mmWave frequency band, e.g., as described below.

In some demonstrative aspects, device 102 and/or device 140 may be configured to support a technical solution to utilize communications over the sub-10GHz frequency band, for example, to assist a beamforming training procedure to be performed by the mmWave STAs, e.g., mmWave STA 141 and/or mmWave STA 161, over the mmWave frequency band, e.g., as described below.

In some demonstrative aspects, device 102 and/or device 140 may be configured to provide a technical solution to support mmWave operation, e.g., operation at the 60GHz band, together with, and/or as part of, a sub-10Ghz functionality, for example, of a mainstream Wi-Fi protocol, e.g., as described below.

In some demonstrative aspects, device 102 and/or device 140 may be configured to support a technical solution, which may be based on and/or may utilize cost reduction of a wireless communication architecture, which may allow to reuse at least some components of, e.g., as much as possible of, the same baseband, for communications by both a sub-10 GHz radio, e.g., a regular Wi-Fi radio, and a mmWave radio, e.g., a 60GHz radio.

In some demonstrative aspects, device 102 and/or device 140 may be configured to support a technical solution, which may be based on and/or may utilize an enhanced throughput supported by mmWave techniques, e.g., compared to a sub-10GHz band (lower band), which may have less potential for throughput enhancement.

In some demonstrative aspects, device 102 and/or device 140 may be configured to support a technical solution, which may be based on, and/or may utilize, a multi-link framework, for example, according to an MLD architecture, e.g., as described above.

In some demonstrative aspects, device 102 and/or device 140 may be configured to utilize the multi-link framework, for example, to improve operation on multiple links. In one example, the multi-link framework may be utilized to allow compensating for a fragility of an mmWave link, e.g., a 60GHz link, for example, through a fallback to the sub-10GHz band (lower band) operation.

In some demonstrative aspects, device 102 and/or device 140 may be configured to support a technical solution to utilize a beamforming (BF) training procedure, e.g., a Basic Beamforming Training (BBT) procedure, which may allow two or more STAs to train their analog smart antenna, for example, to determine the best sector to use to point in the direction of each other, for example, on transmit and/or receive directions, e.g., as described below.

In some demonstrative aspects, the basic beamforming training procedure may include a sector sweep by an initiator device to transmit training symbols and/or a training frame multiple times, for example, using different sectors, e.g., as described below.

In some demonstrative aspects, a receiver device (responder) may perform a receive sector sweep procedure, for example, during the sector sweep of the initiator device, e.g., as described below.

In other aspects, the receiver device may operate at an omni-receive mode to receive training frames from the initiator device.

In some demonstrative aspects, the receiver device may measure one or more values, e.g., a Received Signal Strength Indicator (RSSI), based on training frames that the receive device is capable of receiving from the initiator device.

In some demonstrative aspects, device 102 and/or device 140 may be configured to support a technical solution to perform beamforming training, e.g., the basic beamforming training procedure, over an mmWave wireless communication channel assisted by communications over a sub-10GHz wireless communication channel, e.g., as described below.

In some demonstrative aspects, device 102 and/or device 140 may be configured to perform one or more operations of a procedure (also referred to as "sub-10Ghz assisted procedure"), which may make use of an existing sub-10Ghz link, e.g., a sub-7 GHz link, between two STAs that intend to establish an mmWave link, e.g., a 60 GHz link, to exchange discovery and/or beamforming training-related information, e.g., as described below.

In some demonstrative aspects, the sub-10Ghz assisted procedure may be configured for implementation by a first STA, e.g., a STA implemented by device 102, and a second STA, e.g., a STA implemented by device 140, to perform discovery and/or initial beamforming training in the mmWave band, e.g., the 60 GHz band, for example, by exchanging related information on an existing sub-10Ghz link, e.g., a sub-7 GHz link, as described below.

In some demonstrative aspects, the sub-10Ghz assisted procedure may be configured for implementation by two STAs that have a sub-7 GHz link established to perform 60 GHz discovery and/or initial beamforming, e.g., as described below.

In some demonstrative aspects, for example, the sub-10Ghz assisted procedure may include a first phase (phase 1), which may be configured to support the 60 GHz discovery and initial beamforming process. For example, the first phase may be initiated with the exchange of BF-assistance information on an existing sub-7 GHz link. For example, the BF-assistance information may include system parameters, e.g., a number of sectors, and/or target start time, which may assist in configuring the BF over the mmWave band.

In some demonstrative aspects, for example, the sub-10Ghz assisted procedure may include a second phase (phase 2), which may be configured to support discovery and/or initial beamforming training over the mmWave band. For example, the second phase may include a transmit sector-sweep by an AP, e.g., using different sectors, and possibly other beamforming training procedures.

For example, during the phase 2, the sector-sweep by the AP may include transmission of training (TRN) signals in a MAC frame and/or a Null Data Packet (NDP). For example, the AP may provide to a STA information, e.g., a sector identifier (ID) and/or basic service set identifier (BSSID), in PHY and/or MAC.

For example, the TRN signals may be configured in accordance with an *IEEE 802.11ad*/*ay Specification.* In another example, the TRN signal may have any other additional or alternative configuration.

For example, the TRN signals may be configured to include Long Training Field (LTF)/training sequences, which may be transmitted a plurality of times, e.g., *X* times. For example, a receiver STA may lock reception in an omni-directional receive mode, for example, based on a first part of a PPDU from the AP, and may use a different Rx sector, e.g., for each LTF/training sequence, for example, to perform Rx training.

In some demonstrative aspects for example, the sub-10Ghz assisted procedure may include a third phase (phase 3), which may be configured to support feedback of the discovery and initial beamforming process, for example, over the existing sub-7 GHz link.

For example, the STA may be configured to send to the AP a feedback frame including feedback information, for example, based on measurements performed by the STA on the TRN signals received by the STA. For example, the feedback information may include an indication of one or more sectors, e.g., a best sector, which may be identified based on the measurements. For example, the feedback information may include some or all of the measurement information corresponding to the one or more sectors, e.g., an RSSI corresponding to the best sector, and/or any other additional or alternative information.

In some demonstrative aspects, device 102 and/or device 140 may be configured to generate, transmit, and/or process one or more packets including one or more TRN fields according to a training field format, e.g., as described below.

In some demonstrative aspects, device 102 and/or device 140 may be configured to generate, transmit, and/or process one or more packets including one or more TRN fields according to the training field format, for example, as part of a BF training, for example, an initial BF training procedure.

In some demonstrative aspects, device 102 and/or device 140 may be configured to generate, transmit, and/or process one or more packets including one or more TRN fields according to the training field format, for example, as part of a beam-tracking procedure and/or a beam-refinement procedure, for example, after the initial BF training procedure.

For example, in some use cases or scenarios, a beam-tracking procedure and/or a beam-refinement procedure may be performed, for example, after an initial beamforming phase to determine a best beam, for example, in order to track evolution of the best beam and/or to refine one or more beams.

For example, the initial beamforming procedure may be sufficient to provide a way for 2 peers to point to each other and transmit/receive PPDUs, e.g., with a decent reliability and/or SNR. However, there may be a need to provide a technical solution to support a more optimized beamforming training sequence.

In some demonstrative aspects, device 102 and/or device 140 may be configured to generate, transmit, and/or process one or more packets including one or more TRN fields according to a training field format, which may be configured to provide a technical solution to support an improved, efficient, and/or optimized beamforming training sequence, e.g., as described below.

In some demonstrative aspects, controller 124 may be configured to cause a mmWave STA implemented by device 102,e .g, mmWave STA 141, to transmit a preamble of a packet over a mmWave wireless communication channel, , e.g., as described below.

In some demonstrative aspects, the mmWave channel may include a 60GHz channel. In other aspects, the mmWave channel may include any other mmWave channel.

In some demonstrative aspects, the preamble may be configured to include a Short Training Field (STF), a Long Training Field (LTF) after the STF, and a Signal (SIG) field after the LTF, e.g., as described below.

In some demonstrative aspects, the SIG field may include a presence indicator configured to indicate that the packet includes a TRN field configured for BF training, e.g., as described below.

In some demonstrative aspects, controller 124 may be configured to cause the mmWave STA implemented by device 102 to transmit the TRN field of the packet over the mmWave wireless communication channel, e.g., as described below.

In some demonstrative aspects, the TRN field may be after the SIG field, e.g., as described below.

In some demonstrative aspects, the TRN field may include a plurality of TRN subfields, e.g., as described below.

In some demonstrative aspects, a TRN subfield of the plurality of TRN subfields may include at least one of the STF or the LTF, for example, the same STF and/or the same LTF of the preamble, e.g., as described below.

In some demonstrative aspects, the TRN subfield may include the STF, for example, the same STF of the preamble, e.g., as described below.

In some demonstrative aspects, the TRN subfield may include the LTF, for example, the same LTF of the preamble,, e.g., as described below.

In some demonstrative aspects, the TRN subfield may include the LTF after the STF, e.g., as described below.

In some demonstrative aspects, the TRN subfield may include a plurality of repetitions of the LTF, e.g., as described below.

In other aspects, the TRN subfield may include any other additional or alternative fields and/or combination of fields.

In some demonstrative aspects, controller 154 may be configured to cause a first mmWave STA, for example, an mmWave STA implemented by device 140, e.g., mmWave STA 153, to process a preamble of a packet received from a second mmWave STA over a mmWave wireless communication channel, e.g., as described below.

In some demonstrative aspects, the preamble of the received packet may include an STF, an LTF after the STF, and a SIG field after the LTF, e.g., as described below.

In some demonstrative aspects, the SIG field may include a presence indicator configured to indicate than the packet includes a TRN field configured for BF training after the SIG field, e.g., as described below.

In some demonstrative aspects, controller 154 may be configured to cause the mmWave STA implemented by device 140 to perform measurements on one or more received TRN subfields of the TRN field of the received packet, e.g., as described below.

In some demonstrative aspects, a TRN subfield of the TRN field of the received packet may include at least one of the STF or the LTF, for example, the same STF and/or the same LTF of the preamble, e.g., as described below.

In some demonstrative aspects, for example, the mmWave STA implemented by device 140 may process the preamble of the packet received from the mmWave STA implemented by device 102 over the mmWave wireless communication channel.

In some demonstrative aspects, controller 124 may be configured to cause the mmWave STA implemented by device 102 to transmit the preamble, for example, according to a first Transmit (Tx) antenna setting of the mmWave STA implemented by device 102, e.g., as described below.

In some demonstrative aspects, controller 124 may be configured to cause the mmWave STA implemented by device 102 to transmit the plurality of TRN subfields, for example, according to one or more second Tx antenna settings of the mmWave STA implemented by device 102, e.g., as described below.

In some demonstrative aspects, the one or more second Tx antenna settings may be different from the first Tx antenna setting, e.g., as described below.

In some demonstrative aspects, the first Tx antenna setting may include an omni-directional setting, e.g., as described below.

In some demonstrative aspects, the first Tx antenna setting may include a BF Tx setting according to a previous BF training, e.g., as described below.

In other aspects, the first Tx antenna setting may include any other antenna setting.

In some demonstrative aspects, controller 124 may be configured to cause the mmWave STA implemented by device 102 to transmit the plurality of TRN subfields, for example, according to a sector sweep via a plurality of Tx antenna sectors of the mmWave STA implemented by device 102, e.g., as described below.

In some demonstrative aspects, controller 154 may be configured to cause the mmWave STA implemented by device 140 to receive one or more received TRN subfields, for example, according to a sector sweep via a plurality of Receive (Rx) antenna sectors of the mmWave STA implemented by device 140, e.g., as described below.

In some demonstrative aspects, the packet communicated between the first mmWave STA, e.g., the mmWave STA implemented by device 102, and the second mmWave STA, e.g., the mmWave STA implemented by device 140, may include an NDP , e.g., as described below.

In some demonstrative aspects, the packet communicated between the first mmWave STA, e.g., the mmWave STA implemented by device 102, and the second mmWave STA, e.g., the mmWave STA implemented by device 140, may include a PPDU, e.g., as described below.

In some demonstrative aspects, the PPDU may include a data field after the SIG field, and the TRN filed may be after the data field, e.g., as described below.

In other aspects, the packet communicated between the first mmWave STA, e.g., the mmWave STA implemented by device 102, and the second mmWave STA, e.g., the mmWave STA implemented by device 140, may include any other type of packet.

In some demonstrative aspects, the SIG field in the packet communicated between the first mmWave STA, e.g., the mmWave STA implemented by device 102, and the second mmWave STA, e.g., the mmWave STA implemented by device 140, may include a TRN type indicator configured to indicate a type of the TRN field, e.g., as described below.

In some demonstrative aspects, the TRN type indicator may be configured to indicate the type of the TRN field from a plurality of predefined TRN field types, e.g., as described below.

In some demonstrative aspects, the plurality of predefined TRN field types may include a Transmit (Tx) TRN field type to indicate that the plurality of TRN subfields includes Tx TRN subfields for Tx BF training, e.g., as described below.

In some demonstrative aspects, the plurality of predefined TRN field types may include a Receive (Rx) TRN field type configured to indicate that the plurality of TRN subfields includes Rx TRN subfields for Rx BF training, e.g., as described below.

In some demonstrative aspects, the plurality of predefined TRN field types may include a Tx/Rx TRN field type to indicate that the plurality of TRN subfields includes one or more Tx TRN subfields and one or more Rx TRN subfields, e.g., as described below.

In some demonstrative aspects, the SIG field may include an Rx/Tx field to indicate a count of Rx TRN subfields in a group of Rx TRN subfields corresponding to a Tx TRN subfield, e.g., as described below.

In some demonstrative aspects, the TRN type indicator may include a TRN type field including a type value from a plurality of predefined type values, e.g., as described below.

In some demonstrative aspects, the plurality of predefined type values may include a first value to indicate a Tx TRN field type, a second value to indicate an Rx TRN field type, and/or a third value to indicate a Tx/Rx TRN field type, e.g., as described below.

In some demonstrative aspects, the SIG field may include a TRN subfield count field to indicate a count of the plurality of TRN subfields in the TRN field, e.g., as described below.

In some demonstrative aspects, the SIG field may include a length field, which may be configured to indicate a length of the TRN subfields, e.g., as described below.

In some demonstrative aspects, the SIG field may include an LTF count field, which may be configured to indicate a count of LTFs per TRN subfield, e.g., as described below.

In some demonstrative aspects, the SIG field may include a Tx/Rx configuration field, which may be configured to indicate a configuration of Tx TRN subfields and Rx TRN subfields in the TRN field, e.g., as described below.

In some demonstrative aspects, the SIG field may include any other additional or alternative field corresponding to a configuration of the TRN field and/or contents of the TRN field.

In some demonstrative aspects, a mmWave STA, e.g., an initiator device initiating a packet transmission, may be configured to request feedback from another mmWave STA, e.g., a responder device, participating in a BF training, e.g., as described below.

In some demonstrative aspects, controller 124 may be configured to cause the mmWave STA implemented by device 102 to set the packet including the TRN field to include a feedback indication, e.g., as described below.

In some demonstrative aspects, the feedback indication may be configured to indicate a request that an other mmWave STA participating in the BF training is to transmit to the mmWave STA implemented by device 102 feedback, for example, based on the TRN field, e.g., as described below.

For example, the mmWave STA implemented by device 102 may participate in BF training with the mmWave STA implemented by device 140. For example, the mmWave STA implemented by device 102 may transmit to the mmWave STA implemented by device 140 the packet including the TRN field and the feedback indication to indicate the request that mmWave STA implemented by device 140 is to transmit feedback to the mmWave STA implemented by device 102.

In some demonstrative aspects, the feedback indication may include feedback configuration information to configure which information is to be included in the feedback, e.g., as described below.

In some demonstrative aspects, the SIG field of the packet may include the feedback indication, e.g., as described below.

In some demonstrative aspects, the feedback indication may be included in a data field of the packet. For example, the packet including the TRN field may include a data field, e.g., after the SIG field, and the feedback indication may be included in a data field.

In other aspects, any other additional or alternative field of the packet may be configured to include the feedback indication.

In some demonstrative aspects, controller 154 may be configured to cause the mmWave STA implemented by device 140 to process the packet received from the mmWave STA implemented by device 102, for example, to identify the feedback indication indicating the request that the mmWave STA implemented by device 140 is to transmit feedback based on the measurements on the one or more received TRN subfields of the packet, e.g., as described below.

In some demonstrative aspects, controller 154 may be configured to cause the first mmWave STA implemented by device 140 to, based on the feedback indication in the packet, transmit a packet including the feedback to the mmWave STA implemented by device 102, for example, based on the measurements on the one or more received TRN subfields, e.g., as described below.

In some demonstrative aspects, device 102 and/or device 140 may be configured to perform a reverse-direction beamforming procedure, e.g., as described below.

In some demonstrative aspects, controller 124 may be configured to cause the mmWave STA implemented by device 102 to set the packet to include a reverse-direction TRN request indication, e.g., as described below.

In some demonstrative aspects, the reverse-direction TRN request indication may be configured to indicate a request that another mmWave STA participating in the BF training is to transmit another packet including a reverse-direction TRN field from the other mmWave STA, e.g., as described below.

For example, controller 124 may be configured to cause the mmWave STA implemented by device 102 to set the packet to include a reverse-direction TRN request indication to indicate a request that the mmWave STA implemented by device 140 is to transmit another packet including a reverse-direction TRN field from device 140.

In some demonstrative aspects, the SIG field of the packet may include the reverse-direction TRN request indication, e.g., as described below.

In some demonstrative aspects, the reverse-direction TRN request indication may be included in a data field of the packet. For example, the packet including the TRN field may include a data field, e.g., after the SIG field, and the reverse-direction TRN request indication may be included in a data field.

In other aspects, any other additional or alternative field of the packet may be configured to include the reverse-direction TRN request indication.

In some demonstrative aspects, controller 154 may be configured to cause the mmWave STA implemented by device 140 to identify that a received packet from another mmWave STA includes a reverse-direction TRN field.

In some demonstrative aspects, controller 154 may be configured to cause the mmWave STA implemented by device 140 to, based on the reverse-direction TRN request indication in the received packet, transmit another packet including a reverse-direction TRN field to the other mmWave STA, e.g., as described below.

For example, the mmWave STA implemented by device 140 may be configured to, based on the reverse-direction TRN request indication in the packet from the mmWave STA implemented by device 102, transmit another packet including a reverse-direction TRN field to the mmWave STA implemented by device 102.

In some demonstrative aspects, device 102 and/or device 140 may be configured to communicate a packet including a TRN field according to a training field format, e.g., as described below.

In some demonstrative aspects, the TRN field may be appended at an end of a packet, for example, any PPDU, e.g., as described below.

In some demonstrative aspects, the TRN field may be appended to a PPDU including one or more MAC Service Data Units (MSDUs), one or more Block Acknowledgements (BAs), and/or any other additional or alternative types of PPDUs.

In some demonstrative aspects, the TRN field may include a plurality of TRN subfields, e.g., as described below.

In some demonstrative aspects, the TRN field may be configured according to a TRN field format including a plurality of identical TRN subfields. For example, some or all of the TRN subfields in the TRN field may be identical.

In some demonstrative aspects, the plurality of identical TRN subfields may be configured to provide a technical solution to support a receiver device to perform an RSSI measurement on the TRN field, for example, for a particular configuration of a Tx sector, e.g., of a transmitted of the TRN field, and an Rx sector, e.g., of the receiver device.

In some demonstrative aspects, a TRN field may be configured according to a TRN field format including a plurality of different TRN subfields. For example, some or all of the TRN subfields in the TRN field may different from one another. In one example, the TRN field may be configured according to a TRN field format including two or more different TRN subfields, which may alternate or repeat according to some scheme.

In some demonstrative aspects, device 102 and/or device 140 may be configured to communicate one or more types of TRN fields, for example, from a plurality of different types of TRN fields, e.g., as described below.

In some demonstrative aspects, a TRN field may be configured to include Tx TRN subfields, for example, where a transmit sector may change from one Tx TRN subfield to another.

In some demonstrative aspects, a TRN field may be configured to include Rx TRN subfields, for example, where a transmit sector may not change, while a receiver sector may change from one Rx TRN subfield to another.

In some demonstrative aspects, device 102 and/or device 140 may be configured to communicate and/or process TRN fields of one or more of the following TRN field types:
- A TRN field including only Tx TRN subfields.
- A TRN field including only Rx TRN subfields.
- A TRN field including Tx TRN and Rx TRN subfields. For example, multiple Rx TRN subfields may form a group corresponding to a Tx TRN subfield.

In some demonstrative aspects, device 102 and/or device 140 may be configured to generate, transmit, and/or process a packet, e.g., a PPDU, including a TRN field, and a SIG field including one or more predefined parameters of TRN subfields in the TRN field, e.g., some of, or all of, the following parameters and/or fields:
- A field indicating one or more ways to calculate a length of a PPDU, for example, before the TRN fields.
- A field indicating a presence of a TRN field.
- A field indicating a count (number) of TRN subfields.
- A field ("TRN type") indicating a type of the TRN field. For example, the TRN type field may indicate whether the TRN field includes Tx TRN subfields, Rx TRN subfields, or a combination of Tx TRN subfields and Rx TRN subfields.
- A field indicating a count of Rx TRN subfields in a group of Rx TRN subfields corresponding to a Tx TRN subfield, for example, in case the TRN field includes a combination of Tx TRN subfields and Rx TRN subfields.
- A field indicating a count of Tx TRN subfields.
- A field indicating one or more ways to calculate a length of the TRN subfields, e.g., unless the length of the TRN subfields may be derived from one or more other parameters.
- A field indicating a count of LTFs per TRN subfield, for example, in case of a MIMO TRN.
- A field indicating a count of TRN subfields, a type of the TRN subfields, and/or a pattern of repetition of the TRN subfields, for example, when there is more than one Tx TRN subfield and/or more than one Rx TRN subfield in the TRN field.
   ▪ In one example, in case of multiple TRN subfields, some of the other parameters described above may not be required. In another example, the SIG field may include a parameter, e.g., a flag, configured to denote a multiple TRN subfields mode. According to this example, one or more parameter fields described above, e.g., such as a count of TRN fields and/or a length field, may be overloaded with the parameters listed in this subelement.

In some demonstrative aspects, device 102 and/or device 140 may be configured to communicate feedback from a receiver of the packet including the TRN field, e.g., as described below.

In some demonstrative aspects, an initiator of a packet, e.g., a PPDU, including a TRN field, e.g., a STA implemented by device 102, may be configured to include in the transmitted packet a feedback indication to signal that a receiver of the packet needs to respond with a feedback, e.g., beamforming feedbacks, for example, in the case of transmitter training.

In some demonstrative aspects, the initiator may include the feedback indication in a PHY header of the packet including the TRN field. In one example, the initiator may be configured to signal the feedback indication in the SIG fields of the packet.

In some demonstrative aspects, the initiator may signal the feedback indication in a MAC layer, e.g., through a dedicated frame.

In some demonstrative aspects, the initiator may signal the feedback indication via a new specific A-control frame.

In other aspects, the initiator may signal the feedback indication using any other additional or alternative field, frame and/or signaling mechanism.

In some demonstrative aspects, a responder STA, for example, a receiver of the packet including the TRN field, e.g., a STA implemented by device 140, may be configured to transmit a packet including the feedback to the initiator, for example, based on the feedback indication in the received packet.

In some demonstrative aspects, the feedback may be configured to indicate a sector ID, e.g., a best sector ID, to identify a sector, e.g., a best sector, of the initiator, from which a TRN subfield is received by the responder.

For example, the feedback may indicate the sector ID, for example using a numbering corresponding to the order of a Tx TRN subfield.

For example, the receiver may be configured to determine the sector ID, e.g., the best sector ID, for example, based on an RSSI measurement, and/or any other additional or alternative metrics, for example, including rank of sectors, and/ or eigenvalue analysis.

In some demonstrative aspects, the receiver may be configured to include additional, e.g., more elaborate, information in the feedback.

For example, the feedback may include an RSSI for every Tx sector ID, a full digital beamforming report for the best sector, e.g., in order to support digital beamforming jointly, and/or any other additional or alternative information.

In some demonstrative aspects, device 102 and/or device 140 may be configured to communicate one or more packets with reverse-direction TRN fields, e.g., as described below.

In some demonstrative aspects, an initiator of a packet, e.g., a PPDU, which may or may not include a TRN field, may be configured to include in the packet a reverse-direction TRN request indication. For example, the reverse-direction TRN request indication may be configured to signal that a receiver of the packet needs to respond to the packet, e.g., the PPDU, with another packet, e.g., another PPDU, that contains a TRN field ("reverse-direction TRN field"), for example, in order to perform a beamforming training in a reverse direction.

In some demonstrative aspects, the initiator may include the reverse-direction TRN request indication in a PHY header of the packet. In one example, the initiator may be configured to signal the feedback indication in the SIG fields of the packet.

In some demonstrative aspects, the initiator may signal the reverse-direction TRN request indication in a MAC layer, e.g., through a dedicated frame.

In some demonstrative aspects, the initiator may signal the reverse-direction TRN request indication via a new specific A-control frame.

In other aspects, the initiator may signal the reverse-direction TRN request indication using any other additional or alternative field, frame and/or signaling mechanism.

In some demonstrative aspects, the initiator may include in the packet one or more parameters, which may be configured to support performing the beamforming training, for example, in the packet.

In some demonstrative aspects, one or more parameters, e.g., some or all parameters, for the beamforming training may be exchange and/or negotiated between the initiator and the responder ahead of time, for example, before the transmission of the packet.

In some demonstrative aspects, one or more parameters, e.g., some or all parameters, for the beamforming training may be may be represented by a compressed signaling.

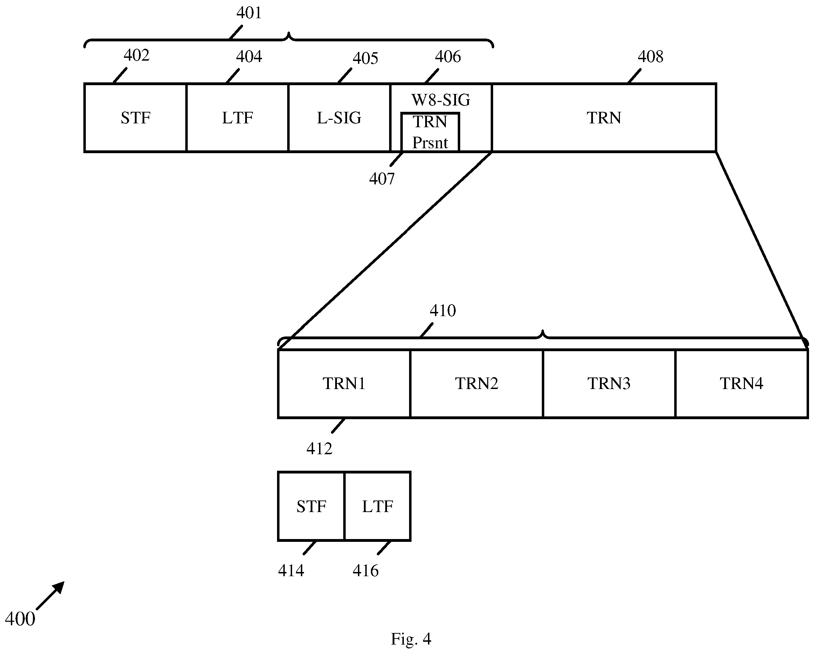

Reference is to Fig. 4, which schematically illustrates an NDP 400, in accordance with some demonstrative aspects.

For example, a STA implemented by device 102 (Fig. 1) and/or a STA implemented by device 140 (Fig. 1) may be configured to generate, transmit, and/or process NDP 400.

In some demonstrative aspects, as shown in Fig. 4, a preamble 401 of the NDP 400 may include an STF 402, an LTF 404 after STF 402, and a SIG field 406 (also referred to as "Wi-Fi 8 SIG" or "W8-SIG"),e.g., after LTF 404. For example, the SIG field 406 may be after a non-High Throughput SIG (L-SIG) field 405.

In some demonstrative aspects, SIG field 406 may include a presence indicator 407 configured to indicate that the NDP 400 includes a TRN field 408 configured for BF training.

In some demonstrative aspects, as shown in Fig. 4, TRN field 408 may be after SIG field 406.

In some demonstrative aspects, as shown in Fig. 4, TRN field 408 may include a plurality of TRN subfields 410.

In some demonstrative aspects, as shown in Fig. 4, a TRN subfield 412 of the plurality of TRN subfields 410 may include an STF 414. For example, the STF 414 may include, or may be identical to, STF 402.

In some demonstrative aspects, as shown in Fig. 4, TRN subfield 412 may include an LTF 416 after the STF 414. For example, the LTF 416 may include, or may be identical to, LTF 404.

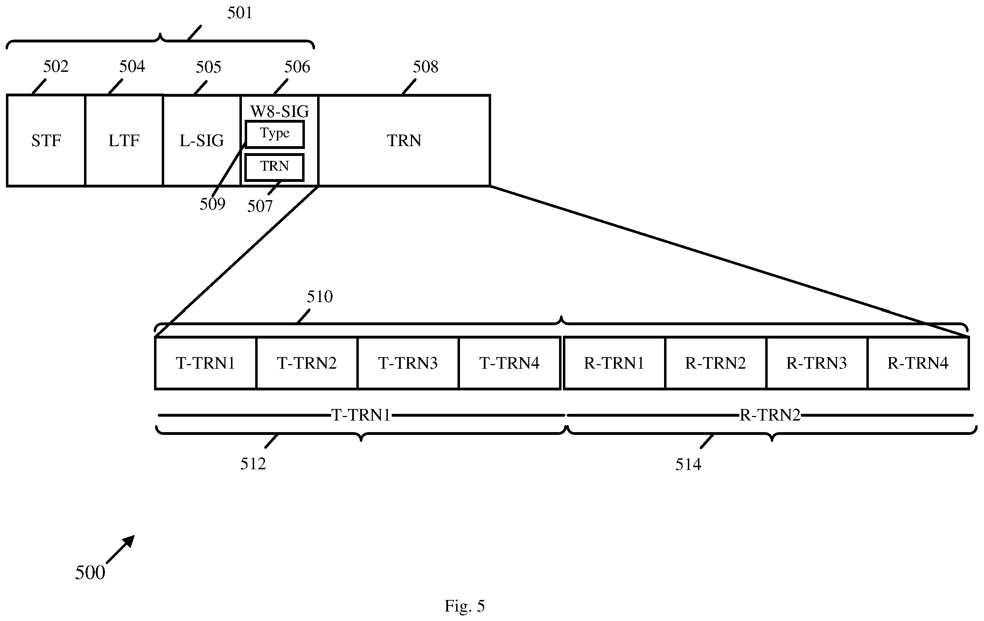

Reference is to Fig. 5, which schematically illustrates an NDP 500, in accordance with some demonstrative aspects.

For example, a STA implemented by device 102 (Fig. 1) and/or a STA implemented by device 140 (Fig. 1) may be configured to generate, transmit, and/or process NDP 500.

In some demonstrative aspects, as shown in Fig. 5, a preamble 501 of the NDP 500 may include an STF 502, an LTF 504 after STF 502, and a SIG field 506 after LTF 504. For example, the SIG field 506 may be after an L-SIG field 505.

In some demonstrative aspects, SIG field 506 may include a presence indicator 507 configured to indicate that the NDP 500 includes a TRN field 508 configured for BF training.

In some demonstrative aspects, as shown in Fig. 5, TRN field 508 may be after SIG field 506.

In some demonstrative aspects, as shown in Fig. 5, TRN field 508 may include a plurality of TRN subfields 510.

In some demonstrative aspects, as shown in Fig. 5, the plurality of TRN subfields 510 may include one or more Tx TRN subfields 512, and/or one or more Rx TRN subfields 514.

In some demonstrative aspects, the SIG field 506 may include a TRN type indicator 509 configured to indicate a type of the TRN field 508.

In some demonstrative aspects, the TRN type indicator 509 may be configured to indicate the type of the TRN field 508 from a plurality of predefined TRN field types.

In some demonstrative aspects, the TRN type indicator 509 may include a Tx/Rx TRN field type to indicate that the plurality of TRN subfields 510 includes the one or more Tx TRN subfields 512, and/or the one or more Rx TRN subfields 514.

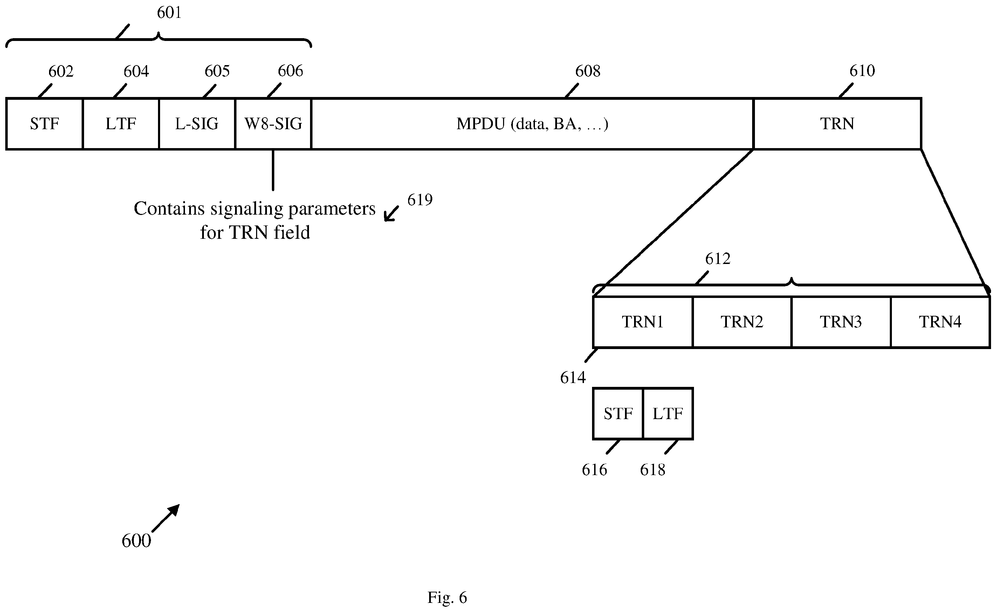

Reference is to Fig. 6, which schematically illustrates a PPDU 600, in accordance with some demonstrative aspects.

For example, a STA implemented by device 102 (Fig. 1) and/or a STA implemented by device 140 (Fig. 1) may be configured to generate, transmit, and/or process PPDU 600.

In some demonstrative aspects, as shown in Fig. 6, a preamble 601 of the PPDU 600 may include an STF 602, an LTF 604 after the STF 602, and a SIG field 606 after the LTF 604. For example, the SIG field 606 may be after an L-SIG field 605.

In some demonstrative aspects, as shown in Fig. 6, PPDU 600 may include a data field 608 after the SIG field 606.

In some demonstrative aspects, as shown in Fig. 6, PPDU 600 may include a TRN field 610, for example, after the data field 608.

In some demonstrative aspects, as shown in Fig. 6, TRN field 610 may include a plurality of TRN subfields 612.

In some demonstrative aspects, as shown in Fig. 6, SIG field 606 may include signaling parameters 619 for configuring TRN field 610. For example, signaling parameters 619 may signal a type of the TRN field 610 and/or a configuration of the TRN subfields 612, e.g., as described above.

In some demonstrative aspects, as shown in Fig. 6, a TRN subfield 614 of the plurality of TRN subfields 612 may include an STF 616. . For example, the STF 616 may include, or may be identical to, STF 602.

In some demonstrative aspects, as shown in Fig. 6, the TRN subfield 614 may include an LTF 618, for example, after the STF 616. For example, the LTF 618 may include, or may be identical to, LTF 604.

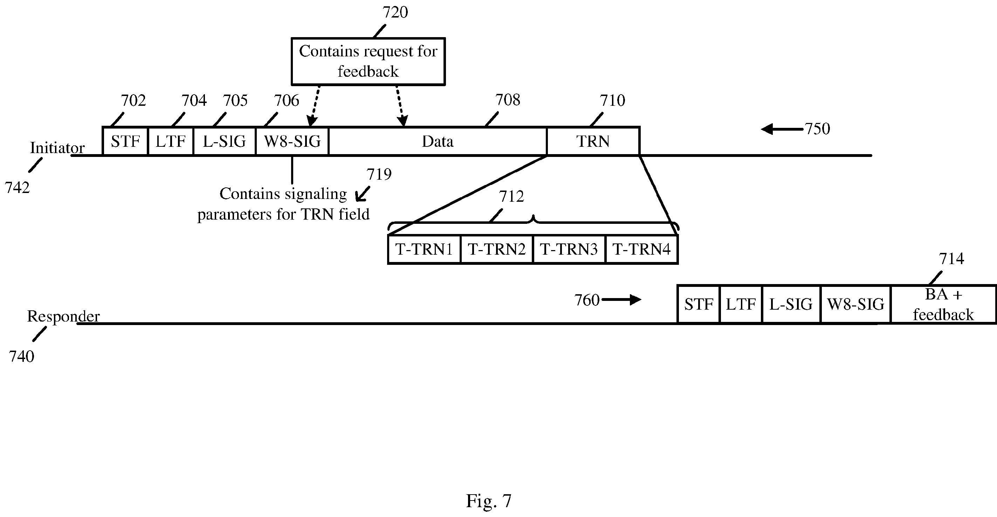

Reference is to Fig. 7, which schematically illustrates a packet exchange, in accordance with some demonstrative aspects.

For example, an mmWave STA implemented by device 102 (Fig. 1) may include, operate as, perform the role of, and/or perform one or more functionalities of, an initiator STA 742. For example, an mmWave STA implemented by device 140 (Fig. 1) may include, operate as, perform the role of, and/or perform one or more functionalities of, a responder STA 740.

In some demonstrative aspects, as shown in Fig. 7, initiator STA 742 may be configured to generate and transmit a PPDU 750.

In some demonstrative aspects, as shown in Fig. 7, PPDU 750 may include an STF 702, an LTF 704 after the STF 702, and a SIG field after the LTF 704. For example, the SIG field 706 may be after an L-SIG field 705.

In some demonstrative aspects, as shown in Fig. 7, PPDU 750 may include a data field 708 after SIG field 706.

In some demonstrative aspects, as shown in Fig. 7, PPDU 750 may include a TRN field 710, e.g., appended at the end of PPDU 750, for example, after data field 708.

In some demonstrative aspects, as shown in Fig. 7, TRN field 710 may include a plurality of TRN subfields 712.

In some demonstrative aspects, TRN field 710 may be configured to support Tx beamforming training of initiator STA 742. For example, as shown in Fig. 7, TRN subfields 712 may include Tx TRN subfields.

In some demonstrative aspects, as shown in Fig. 7, SIG field 706 may include signaling parameters 719 for configuring TRN field 710. For example, signaling parameters 719 may signal a type of the TRN field 710 and/or a configuration of the TRN subfields 712, e.g., as described above.

In some demonstrative aspects, signaling parameters 719 may include a Tx TRN field type to indicate that the plurality of TRN subfields 712 includes Tx TRN subfields for Tx BF training.

In some demonstrative aspects, as shown in Fig. 7, PPDU 750 may include a feedback indication 720 to indicate a request that responder STA 740 is to transmit to initiator 742 feedback, for example, based on the TRN field 710.

In some demonstrative aspects, feedback indication 720 may include feedback configuration information to configure which information is to be included in the feedback, e.g., as described above.

In one example, as shown in Fig. 7, SIG field 706 may include feedback indication 720.

In another example, as shown in Fig. 7, data field 708 may include feedback indication 720.

In some demonstrative aspects, responder STA 740 may be configured to receive and process PPDU 750 including feedback indication 720.

In some demonstrative aspects, responder STA 740 may be configured to, based on identifying the feedback indication 720 in PPDU 750, transmit a packet 760 including feedback 714 to initiator STA 742.

In some demonstrative aspects, feedback 714 may be based on measurements performed by responder STA 740 on one or more received TRN subfields of the plurality of TRN subfields 712.

In some demonstrative aspects, feedback 714 may include an indication of a best Tx sector of the initiator STA 742, e.g., which may be identified by the responder STA 742, for example, based on the measurements performed on the received TRN subfields.

In some demonstrative aspects, feedback 714 may include one or more RSSI values, e.g., corresponding to one or more Tx sectors of the initiator STA 742, e.g., which may be identified by the responder STA 742, for example, based on the measurements performed on the received TRN subfields. In one example, the feedback 714 may include an RSSI corresponding to the best Tx sector. In another example, the feedback 714 may include a plurality of RSSIs corresponding to a plurality of Tx sectors.

In some demonstrative aspects, feedback 714 may include a complete compressed beamforming feedback, e.g., which may be identified by the responder STA 742, for example, based on the measurements performed on the received TRN subfields.

In other aspects, feedback 714 may include any other additional or alternative information.

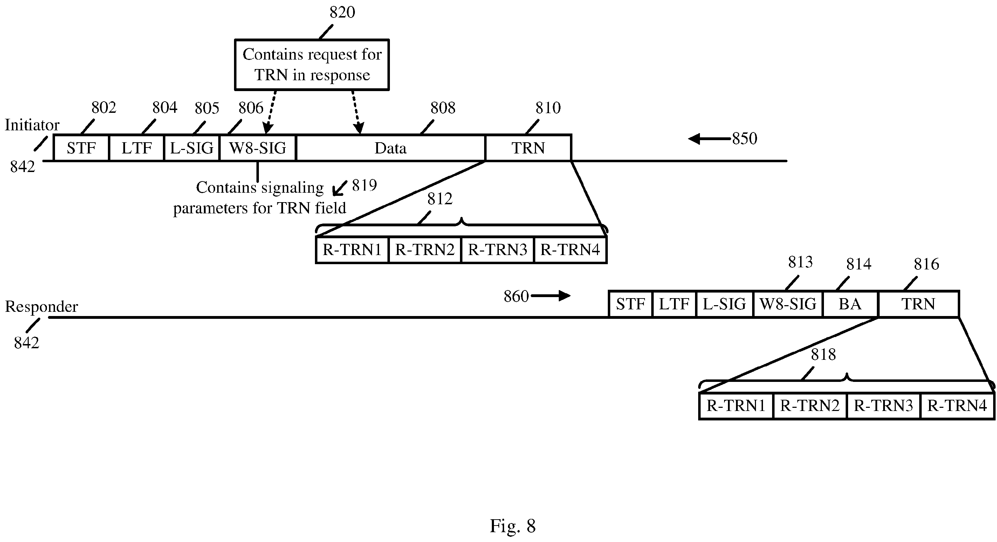

Reference is to Fig. 8, which schematically illustrates a packet exchange, in accordance with some demonstrative aspects.

For example, an mmWave STA implemented by device 102 (Fig. 1) may include, operate as, perform the role of, and/or perform one or more functionalities of, an initiator STA 842. For example, an mmWave STA implemented by device 140 (Fig. 1) may include, operate as, perform the role of, and/or perform one or more functionalities of, a responder STA 840.

In some demonstrative aspects, initiator STA 842 and/or responder STA 840 may be configured to perform the packet exchange of Fig. 8, for example, in a way that may support refinement of a BF training, for example, in both Tx and Rx communication directions.

In some demonstrative aspects, as shown in Fig. 8, initiator STA 842 may be configured to generate and transmit a PPDU 850.

In some demonstrative aspects, as shown in Fig. 8, PPDU 850 may include an STF 802, an LTF 804 after the STF 802, and a SIG field after the LTF 804. For example, the SIG field 806 may be after an L-SIG field 805.

In some demonstrative aspects, as shown in Fig. 8, PPDU 850 may include a data field 808 after SIG field 806.

In some demonstrative aspects, as shown in Fig. 8, PPDU 850 may include a TRN field 810, e.g., appended at the end of PPDU 850, for example, after data field 808.

In some demonstrative aspects, as shown in Fig. 8, TRN field 810 may include a plurality of TRN subfields 812.

In some demonstrative aspects, TRN field 810 may be configured to support Rx beamforming training of responder STA 840. For example, as shown in Fig. 8, TRN subfields 812 may include Rx TRN subfields.

In some demonstrative aspects, as shown in Fig. 8, SIG field 806 may include signaling parameters 819 for configuring TRN field 810. For example, signaling parameters 819 may signal a type of the TRN field 810 and/or a configuration of the TRN subfields 812, e.g., as described above.

In some demonstrative aspects, signaling parameters 819 may include an Rx TRN field type to indicate that the plurality of TRN subfields 812 includes Rx TRN subfields for Rx BF training.

In some demonstrative aspects, as shown in Fig. 8, PPDU 850 may include a reverse-direction TRN request indication 820.

In some demonstrative aspects, reverse-direction TRN request indication 820 may be configured to indicate a request that responder STA 840 is to transmit a packet including a reverse-direction TRN field from responder STA 840.

In one example, as shown in Fig. 8, SIG field 806 may include reverse-direction TRN request indication 820.

In another example, as shown in Fig. 8, data field 808 may include reverse-direction TRN request indication 820.

In other aspects, reverse-direction TRN request indication 820 may be included in any other additional or alternative field of PPDU 850.

In some demonstrative aspects, responder STA 840 may be configured to receive and process PPDU 850 including reverse-direction TRN request indication 820.

In some demonstrative aspects, as shown in Fig. 8, responder STA 840 may be configured to, based on identifying the reverse-direction TRN request indication 820 in the PPDU 850, transmit a packet 860 including a reverse-direction TRN field 816 to initiator STA 842.

In some demonstrative aspects, as shown in Fig. 8, packet 860 may include a BA field 814, for example, after a SIG field 813.

In some demonstrative aspects, as shown in Fig. 8, packet 860 may include reverse-direction TRN field 816, which may be configured for Rx BF training of initiator STA 842.

In some demonstrative aspects, as shown in Fig. 8, reverse-direction TRN field 816 may include a plurality of TRN subfields 818.

In some demonstrative aspects, SIG field 813 may include an Rx TRN field type to indicate that the plurality of TRN subfields 818 includes Rx TRN subfields for Rx BF training.

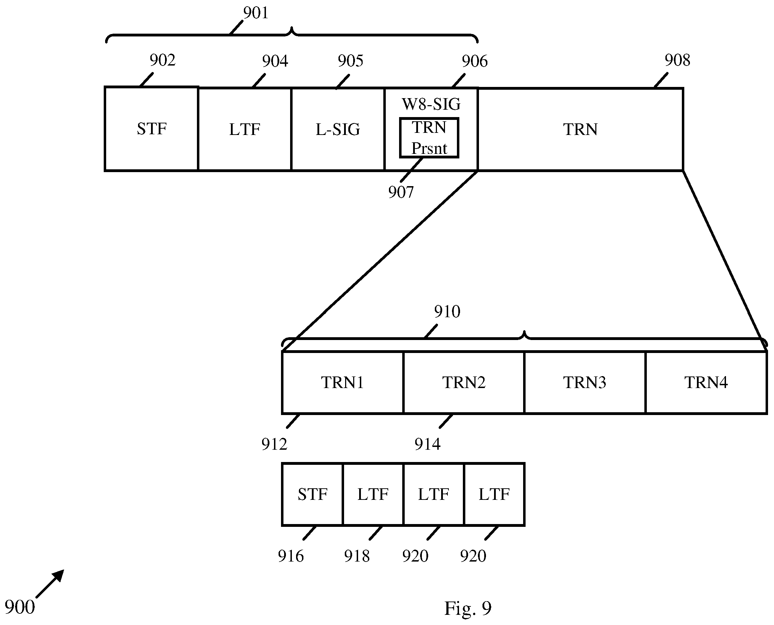

Reference is to Fig. 9, which schematically illustrates an NDP 900, in accordance with some demonstrative aspects.

For example, an mmWave STA implemented by device 102 (Fig. 1) and/or an mmWave STA implemented by device 140 (Fig. 1) may be configured to generate, transmit, and/or process NDP 900.

In some demonstrative aspects, as shown in Fig. 9, a preamble 901 of the NDP 900 may include an STF 902, an LTF 904 after STF 902, and a SIG field 906 after LTF 904. For example, the SIG field 606 may be after an L-SIG field 905.

In some demonstrative aspects, SIG field 906 may include a presence indicator 907 configured to indicate that the NDP 900 includes a TRN field 908 configured for BF training.

In some demonstrative aspects, as shown in Fig. 9, TRN field 908 may be after SIG field 906.

In some demonstrative aspects, as shown in Fig. 9, TRN field 908 may include a plurality of TRN subfields 910.

In some demonstrative aspects, as shown in Fig. 9, a TRN subfield 912 of the plurality of TRN subfields 910 may include an STF 916. For example, the STF 916 may include, or may be identical to, STF 902.

In some demonstrative aspects, as shown in Fig. 9, TRN subfield 912 may include an LTF 918, e.g., after the STF 916. For example, the LTF 918 may include, or may be identical to, LTF 904.

In some demonstrative aspects, as shown in Fig. 9, a TRN subfield 914 of the plurality of TRN subfields 910 may include a plurality of repetitions of an LTF 920. For example, the LTF 920 may include, or may be identical to, LTF 918. For example, the LTF 920 may include, or may be identical to, LTF 904.

In some demonstrative aspects, the plurality of repetitions of the LTF 920 may be configured to provide a technical solution to assist in performing MIMO BF training. For example, the plurality of repetitions of the LTF 920 may be transmitted from different antennas with a specific spreading code to differentiate the different antennas, e.g., utilizing tools for digital sounding in the 2.4/5/6GHz bands.

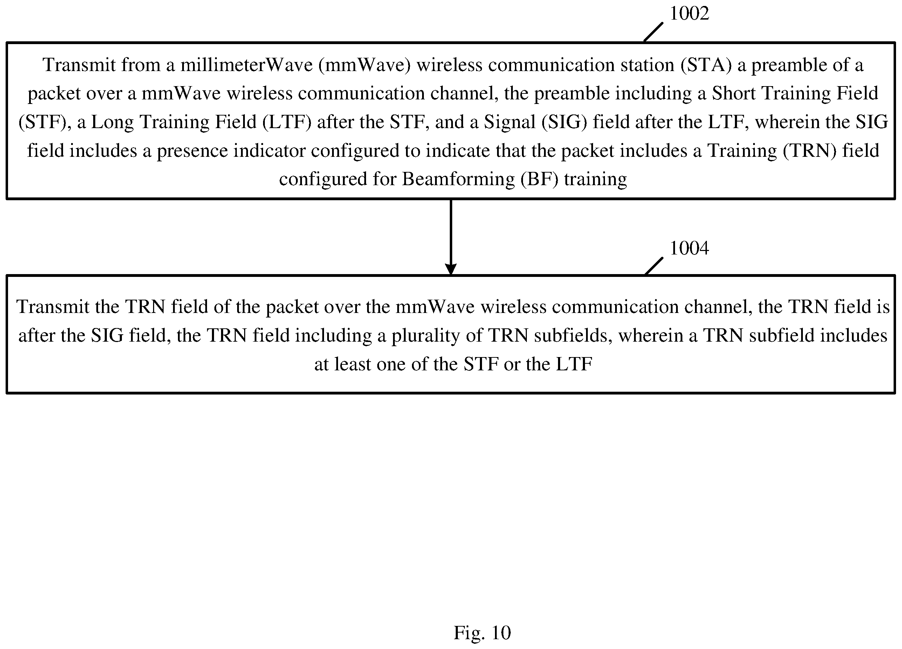

Reference is made to Fig. 10, which schematically illustrates a method of communicating a packet including a TRN field, in accordance with some demonstrative aspects. For example, one or more of the operations of the method of Fig. 10 may be performed by one or more elements of a system, e.g., system 100 (Fig. 1), for example, one or more wireless devices, e.g., device 102 (Fig. 1), and/or device 140 (Fig. 1), an MLD, e.g., MLD 131 (Fig. 1) and/or MLD 151 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 1002, the method may include transmitting from an mmWave STA a preamble of a packet over a mmWave wireless communication channel. For example, the preamble may include an STF, an LTF after the STF, and a SIG field after the LTF. For example, the SIG field may include a presence indicator configured to indicate that the packet includes a TRN field configured for BF training. For example, controller 124 (Fig. 1) may be configured to cause, trigger, and/or control device 102 (Fig. 1) to transmit the preamble of the packet over the mmWave wireless communication channel, e.g., as described above.

As indicated at block 1004, the method may include transmitting the TRN field of the packet over the mmWave wireless communication channel. For example, the TRN field may be after the SIG field, and may include a plurality of TRN subfields. For example, a TRN subfield may include at least one of the STF or the LTF. For example, controller 124 (Fig. 1) may be configured to cause, trigger, and/or control device 102 (Fig. 1) to transmit the TRN field of the packet over the mmWave wireless communication channel, e.g., as described above.

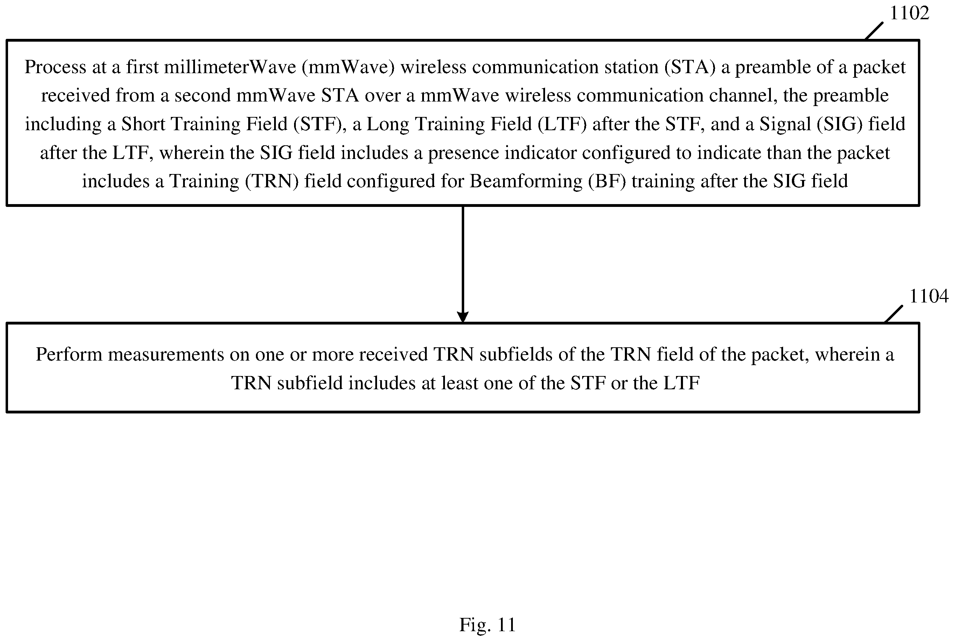

Reference is made to Fig. 11, which schematically illustrates a method of communicating a packet including a TRN field, in accordance with some demonstrative aspects. For example, one or more of the operations of the method of Fig. 11 may be performed by one or more elements of a system, e.g., system 100 (Fig. 1), for example, one or more wireless devices, e.g., device 102 (Fig. 1) and/or device 140 (Fig. 1), an MLD, e.g., MLD 131 (Fig. 1) and/or MLD 151 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 1102, the method may include processing at a first mmWave STA a preamble of a packet received from a second mmWave STA over a mmWave wireless communication channel. For example, the preamble may include an STF, an LTF after the STF, and a SIG field after the LTF. For example, the SIG field may include a presence indicator configured to indicate that the packet includes a TRN field configured for BF training after the SIG field. For example, controller 154 (Fig. 1) may be configured to cause, trigger, and/or control device 140 (Fig. 1) to process the preamble of the packet received from device 102 (Fig. 1), e.g., as described above.

As indicated at block 1104, the method may include performing measurements on one or more received TRN subfields of the TRN field of the packet. For example, a TRN subfield may include the STF and/or the LTF. For example, controller 154 (Fig. 1) may be configured to cause, trigger, and/or control device 140 (Fig. 1) to perform measurements on one or more received TRN subfields of the TRN field of the packet, e.g., as described above.

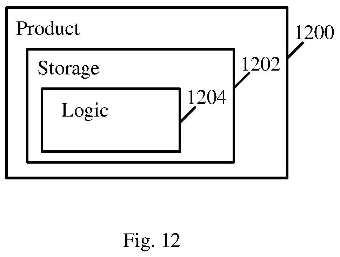

Reference is made to Fig. 12, which schematically illustrates a product of manufacture 1200, in accordance with some demonstrative aspects. Product 1200 may include one or more tangible computer-readable ("machine-readable") non-transitory storage media 1202, which may include computer-executable instructions, e.g., implemented by logic 1204, operable to, when executed by at least one computer processor, enable the at least one computer processor to implement one or more operations at device 102 (Fig. 1), device 140 (Fig. 1), MLD 131 (Fig. 1), MLD 151 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1); to cause device 102 (Fig. 1), device 140 (Fig. 1), MLD 131 (Fig. 1), MLD 151 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to perform, trigger and/or implement one or more operations and/or functionalities; and/or to perform, trigger and/or implement one or more operations and/or functionalities described with reference to the Figs. 1, 2, 3, 4, 5, 6, 7, 8, 9, 10, and/or 11, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1200 and/or machine-readable storage media 1202 may include one or more types of computer-readable storage media capable of storing data, including volatile memory, non-volatile memory, removable or non-removable memory, erasable or non-erasable memory, writeable or re-writeable memory, and the like. For example, machine-readable storage media 1202 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1204 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1204 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a millimeterWave (mmWave) wireless communication station (STA) to transmit a preamble of a packet over a mmWave wireless communication channel, the preamble comprising a Short Training Field (STF), a Long Training Field (LTF) after the STF, and a Signal (SIG) field after the LTF, and optionally, wherein the SIG field comprises a presence indicator configured to indicate that the packet comprises a Training (TRN) field configured for Beamforming (BF) training; and transmit the TRN field of the packet over the mmWave wireless communication channel, the TRN field is after the SIG field, the TRN field comprising a plurality of TRN subfields, and optionally, wherein a TRN subfield comprises at least one of the STF or the LTF.

Example 2 includes the subject matter of Example 1, and optionally, wherein the SIG field comprises a TRN type indicator configured to indicate a type of the TRN field.

Example 3 includes the subject matter of Example 2, and optionally, and optionally, wherein the TRN type indicator is configured to indicate the type of the TRN field from a plurality of predefined TRN field types, and optionally, wherein the plurality of predefined TRN field types comprises a Transmit (Tx) TRN field type, and a Receive (Rx) TRN field type, and optionally, wherein the Tx TRN field type is to indicate that the plurality of TRN subfields comprises Tx TRN subfields for Tx BF training, and optionally, wherein the Rx TRN field type is to indicate that the plurality of TRN subfields comprises Rx TRN subfields for Rx BF training.

Example 4 includes the subject matter of Example 3, and optionally, wherein the plurality of predefined TRN field types comprises a Tx/Rx TRN field type to indicate that the plurality of TRN subfields comprises one or more Tx TRN subfields and one or more Rx TRN subfields.

Example 5 includes the subject matter of Example 4, and optionally, wherein the SIG field comprises an Rx/Tx field to indicate a count of Rx TRN subfields in a group of Rx TRN subfields corresponding to a Tx TRN subfield.

Example 6 includes the subject matter of any one of Examples 2-5, and optionally, wherein the TRN type indicator comprises a TRN type field comprising a type value from a plurality of predefined type values, the plurality of predefined type values comprises a first value to indicate a Transmit (Tx) TRN field type, a second value to indicate a Receive (Rx) TRN field type, and a third value to indicate a Tx/Rx TRN field type.

Example 7 includes the subject matter of any one of Examples 1-6, and optionally, wherein the SIG field comprises a TRN subfield count field to indicate a count of the plurality of TRN subfields.

Example 8 includes the subject matter of any one of Examples 1-7, and optionally, wherein the SIG field comprises at least one of a length field, an LTF count field, or a Transmit (Tx)/Receive (Rx) (Tx/Rx) configuration field, and optionally, wherein the length field is to indicate a length of the TRN subfields, the LTF count field is to indicate a count of LTFs per TRN subfield, the Tx/Rx configuration field to indicate a configuration of Tx TRN subfields and Rx TRN subfields in the TRN field.

Example 9 includes the subject matter of any one of Examples 1-8, and optionally, wherein the packet comprises a feedback indication to indicate a request that an other mmWave STA participating in the BF training is to transmit to the mmWave STA feedback based on the TRN field.

Example 10 includes the subject matter of Example 9, and optionally, wherein the feedback indication comprises feedback configuration information to configure which information is to be included in the feedback.

Example 11 includes the subject matter of Example 9 or 10, and optionally, wherein the SIG field comprises the feedback indication.

Example 12 includes the subject matter of Example 9 or 10, and optionally, wherein the packet comprises a data field after the SIG field, the data field comprising the feedback indication.

Example 13 includes the subject matter of any one of Examples 1-12, and optionally, wherein the packet comprises a reverse-direction TRN request indication to indicate a request that an other mmWave STA participating in the BF training is to transmit another packet comprising a reverse-direction TRN field from the other mmWave STA.

Example 14 includes the subject matter of Example 13, and optionally, wherein the SIG field comprises the reverse-direction TRN request indication.

Example 15 includes the subject matter of Example 13, and optionally, wherein the packet comprises a data field after the SIG field, the data field comprising the reverse-direction TRN request indication.

Example 16 includes the subject matter of any one of Examples 1-15, and optionally, wherein the apparatus is configured to cause the mmWave STA to transmit the preamble according to a first Transmit (Tx) antenna setting of the mmWave STA, and to transmit the plurality of TRN subfields according to one or more second Tx antenna settings of the mmWave STA, the one or more second Tx antenna settings different from the first Tx antenna setting.

Example 17 includes the subject matter of Example 16, and optionally, wherein the first Tx antenna setting comprises an omni-directional setting.

Example 18 includes the subject matter of Example 16, and optionally, wherein the first Tx antenna setting comprises a BF Tx setting according to a previous BF training.

Example 19 includes the subject matter of any one of Examples 1-18, and optionally, wherein the apparatus is configured to cause the mmWave STA to transmit the plurality of TRN subfields according to a sector sweep via a plurality of Transmit (Tx) antenna sectors of the mmWave STA.

Example 20 includes the subject matter of any one of Examples 1-19, and optionally, wherein the TRN subfield comprises the STF.

Example 21 includes the subject matter of Example 20, and optionally, wherein the TRN subfield comprises the LTF after the STF.

Example 22 includes the subject matter of any one of Examples 1-21, and optionally, wherein the TRN subfield comprises the LTF.

Example 23 includes the subject matter of any one of Examples 1-22, and optionally, wherein the TRN subfield comprises a plurality of repetitions of the LTF.

Example 24 includes the subject matter of any one of Examples 1-23, and optionally, wherein the packet comprises a Null-Data-Packet (NDP).

Example 25 includes the subject matter of any one of Examples 1-23, and optionally, wherein the packet comprises a Physical layer (PHY) Protocol Data Unit (PPDU) comprising a data field after the SIG field, and optionally, wherein the TRN field is after the data field.

Example 26 includes the subject matter of any one of Examples 1-25, and optionally, wherein the mmWave wireless communication channel comprises a 60GHz channel.

Example 27 includes the subject matter of any one of Examples 1-26, and optionally, comprising a radio to transmit the packet over the mmWave wireless communication channel.

Example 28 includes the subject matter of Example 27, and optionally, comprising one or more antennas connected to the radio, and a processor to execute instructions of an operating system of the mmWave STA.

Example 29 includes an apparatus comprising logic and circuitry configured to cause a first millimeterWave (mmWave) wireless communication station (STA) to process a preamble of a packet received from a second mmWave STA over a mmWave wireless communication channel, the preamble comprising a Short Training Field (STF), a Long Training Field (LTF) after the STF, and a Signal (SIG) field after the LTF, and optionally, wherein the SIG field comprises a presence indicator configured to indicate that the packet comprises a Training (TRN) field configured for Beamforming (BF) training after the SIG field; and perform measurements on one or more received TRN subfields of the TRN field of the packet, and optionally, wherein a TRN subfield comprises at least one of the STF or the LTF.

Example 30 includes the subject matter of Example 29, and optionally, wherein the SIG field comprises a TRN type indicator configured to indicate a type of the TRN field.

Example 31 includes the subject matter of Example 30, and optionally, wherein the TRN type indicator is configured to indicate the type of the TRN field from a plurality of predefined TRN field types, and optionally, wherein the plurality of predefined TRN field types comprises a Transmit (Tx) TRN field type, and a Receive (Rx) TRN field type, and optionally, wherein the Tx TRN field type is to indicate that the plurality of TRN subfields comprises Tx TRN subfields for Tx BF training, and optionally, wherein the Rx TRN field type is to indicate that the plurality of TRN subfields comprises Rx TRN subfields for Rx BF training.

Example 32 includes the subject matter of Example 31, and optionally, wherein the plurality of predefined TRN field types comprises a Tx/Rx TRN field type to indicate that the plurality of TRN subfields comprises one or more Tx TRN subfields and one or more Rx TRN subfields.

Example 33 includes the subject matter of Example 32, and optionally, wherein the SIG field comprises an Rx/Tx field to indicate a count of Rx TRN subfields in a group of Rx TRN subfields corresponding to a Tx TRN subfield.

Example 34 includes the subject matter of any one of Examples 30-33, and optionally, wherein the TRN type indicator comprises a TRN type field comprising a type value from a plurality of predefined type values, the plurality of predefined type values comprises a first value to indicate a Transmit (Tx) TRN field type, a second value to indicate a Receive (Rx) TRN field type, and a third value to indicate a Tx/Rx TRN field type.

Example 35 includes the subject matter of any one of Examples 29-34, and optionally, wherein the SIG field comprises a TRN subfield count field to indicate a count of the plurality of TRN subfields.

Example 36 includes the subject matter of any one of Examples 29-35, and optionally, wherein the SIG field comprises at least one of a length field, an LTF count field, or a Transmit (Tx)/Receive (Rx) (Tx/Rx) configuration field, and optionally, wherein the length field is to indicate a length of the TRN subfields, the LTF count field is to indicate a count of LTFs per TRN subfield, the Tx/Rx configuration field to indicate a configuration of Tx TRN subfields and Rx TRN subfields in the TRN field.

Example 37 includes the subject matter of any one of Examples 29-36, and optionally, wherein the apparatus is configured to cause the first mmWave STA to, based on a feedback indication in the packet, transmit a packet comprising feedback to the second mmWave STA based on the measurements on the one or more received TRN subfields.

Example 38 includes the subject matter of Example 37, and optionally, wherein the feedback indication comprises feedback configuration information to configure which information is to be included in the feedback.

Example 39 includes the subject matter of Example 37 or 38, and optionally, wherein the SIG field comprises the feedback indication.

Example 40 includes the subject matter of Example 37 or 38, and optionally, wherein the packet comprises a data field after the SIG field, the data field comprising the feedback indication.

Example 41 includes the subject matter of any one of Examples 29-36, and optionally, wherein the apparatus is configured to cause the first mmWave STA to, based on a reverse-direction TRN request indication in the packet, transmit another packet comprising a reverse-direction TRN field to the second mmWave STA.

Example 42 includes the subject matter of Example 41, and optionally, wherein the SIG field comprises the reverse-direction TRN request indication.

Example 43 includes the subject matter of Example 41, and optionally, wherein the packet comprises a data field after the SIG field, the data field comprising the reverse-direction TRN request indication.

Example 44 includes the subject matter of any one of Examples 29-43, and optionally, wherein the apparatus is configured to cause the first mmWave STA to receive the one or more received TRN subfields according to a sector sweep via a plurality of Receive (Rx) antenna sectors of the first mmWave STA.

Example 45 includes the subject matter of any one of Examples 29-44, and optionally, wherein the TRN subfield comprises the STF.

Example 46 includes the subject matter of Example 45, and optionally, wherein the TRN subfield comprises the LTF after the STF.

Example 47 includes the subject matter of any one of Examples 29-46, and optionally, wherein the TRN subfield comprises the LTF.

Example 48 includes the subject matter of any one of Examples 29-47, and optionally, wherein the TRN subfield comprises a plurality of repetitions of the LTF.

Example 49 includes the subject matter of any one of Examples 29-48, and optionally, wherein the packet comprises a Null-Data-Packet (NDP).

Example 50 includes the subject matter of any one of Examples 29-49, and optionally, wherein the packet comprises a Physical layer (PHY) Protocol Data Unit (PPDU) comprising a data field after the SIG field, and optionally, wherein the TRN field is after the data field.

Example 51 includes the subject matter of any one of Examples 29-50, and optionally, wherein the mmWave wireless communication channel comprises a 60GHz channel.

Example 52 includes the subject matter of any one of Examples 29-51, and optionally, comprising a radio to receive the packet over the mmWave wireless communication channel.

Example 53 includes the subject matter of Example 52, and optionally, comprising one or more antennas connected to the radio, and a processor to execute instructions of an operating system of the first mmWave STA.

Example 54 comprises a wireless communication device comprising the apparatus of any of Examples 1-53.

Example 55 comprises an apparatus comprising means for executing any of the described operations of any of Examples 1-53.

Example 56 comprises a product comprising one or more tangible computer-readable non-transitory storage media comprising computer-executable instructions operable to, when executed by at least one processor, enable the at least one processor to cause a wireless communication device to perform any of the described operations of any of Examples 1-53.

Example 57 comprises an apparatus comprising: a memory interface; and processing circuitry configured to: perform any of the described operations of any of Examples 1-53.

Example 58 comprises a method comprising any of the described operations of any of Examples 1-53.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed by a millimeterWave (mmWave) wireless communication station (STA), the method comprising:
transmitting a preamble of a packet over a mmWave wireless communication channel, the preamble comprising a Short Training Field (STF), a Long Training Field (LTF) after the STF, and a Signal (SIG) field after the LTF, wherein the SIG field comprises a presence indicator configured to indicate that the packet comprises a Training (TRN) field configured for Beamforming (BF) training; and
transmitting the TRN field of the packet over the mmWave wireless communication channel, the TRN field is after the SIG field, the TRN field comprising a plurality of TRN subfields, wherein a TRN subfield comprises at least one of the STF or the LTF, wherein the SIG field comprises a TRN type indicator configured to indicate a type of the TRN field.

2. The method of claim 1 comprising transmitting the preamble according to a first Transmit (Tx) antenna setting of the mmWave STA, and transmitting the plurality of TRN subfields according to one or more second Tx antenna settings of the mmWave STA, the one or more second Tx antenna settings different from the first Tx antenna setting.

3. A method to be performed by a first millimeterWave (mmWave) wireless communication station (STA), the method comprising:
processing a preamble of a packet received from a second mmWave STA over a mmWave wireless communication channel, the preamble comprising a Short Training Field (STF), a Long Training Field (LTF) after the STF, and a Signal (SIG) field after the LTF, wherein the SIG field comprises a presence indicator configured to indicate that the packet comprises a Training (TRN) field configured for Beamforming (BF) training after the SIG field, wherein the SIG field comprises a TRN type indicator configured to indicate a type of the TRN field; and
performing measurements on one or more received TRN subfields of the TRN field of the packet, wherein a TRN subfield comprises at least one of the STF or the LTF.

4. The method of any one of claims 1-3, wherein the TRN type indicator is configured to indicate the type of the TRN field from a plurality of predefined TRN field types, wherein the plurality of predefined TRN field types comprises a Transmit (Tx) TRN field type, and a Receive (Rx) TRN field type, wherein the Tx TRN field type is to indicate that the plurality of TRN subfields comprises Tx TRN subfields for Tx BF training, wherein the Rx TRN field type is to indicate that the plurality of TRN subfields comprises Rx TRN subfields for Rx BF training.

5. The method of claim 4, wherein the plurality of predefined TRN field types comprises a Tx/Rx TRN field type to indicate that the plurality of TRN subfields comprises one or more Tx TRN subfields and one or more Rx TRN subfields.

6. The method of claim 5, wherein the SIG field comprises an Rx/Tx field to indicate a count of Rx TRN subfields in a group of Rx TRN subfields corresponding to a Tx TRN subfield.

7. The method of claim 6, wherein the TRN type indicator comprises a TRN type field comprising a type value from a plurality of predefined type values, the plurality of predefined type values comprises a first value to indicate a Transmit (Tx) TRN field type, a second value to indicate a Receive (Rx) TRN field type, and a third value to indicate a Tx/Rx TRN field type.

8. The method of any one of claims 1-7, wherein the TRN subfield comprises the STF.

9. The method of any one of claims 1-8, wherein the TRN subfield comprises a plurality of repetitions of the LTF.

10. The method of any one of claims 1-9, wherein the packet comprises a Physical layer (PHY) Protocol Data Unit (PPDU) comprising a data field after the SIG field, and optionally, wherein the TRN field is after the data field.

11. The method of any one of claims 1-10, wherein the SIG field comprises at least one of TRN subfield count field to indicate a count of the plurality of TRN subfields, a length field, an LTF count field, and/or a Transmit (Tx)/Receive (Rx) (Tx/Rx) configuration field, wherein the length field is to indicate a length of the TRN subfields, the LTF count field is to indicate a count of LTFs per TRN subfield, the Tx/Rx configuration field to indicate a configuration of Tx TRN subfields and Rx TRN subfields in the TRN field.

12. The method of any one of claims 1-11, wherein the packet comprises a feedback indication to indicate a request that an other mmWave STA participating in the BF training is to transmit to the mmWave STA feedback based on the TRN field.

13. The method of any one of claims 1-12, wherein the packet comprises a reverse-direction TRN request indication to indicate a request that an other mmWave STA participating in the BF training is to transmit another packet comprising a reverse-direction TRN field from the other mmWave STA.

14. An apparatus comprising a controller configured to cause a wireless communication device to perform the method of any one of claims 1-13.

15. A product comprising one or more tangible computer-readable non-transitory storage media comprising computer-executable instructions operable to, when executed by at least one processor, enable the at least one processor to cause a millimeterWave (mmWave) wireless communication station (STA) to perform the method of any one of claims 1-13.
